# EUROPEAN PATENT APPLICATION

(11) **EP 4 246 694 A1**
(43) Date of publication of application: **20.09.2023**
(21) Application number: 22214816.5
(22) Date of filing: 20.12.2022
(51) Int. Cl.: H01M 50/35, H01M 50/367, H01M 10/625, H01M 50/211, H01M 50/30, H01M 10/613, H01M 50/209

(54) **BATTERY MODULE AND BATTERY PACK HAVING THE SAME**

(30) Priority: 10.01.2022 KR 20220003560
(71) Applicant: SK On Co., Ltd., Seoul 03161 (KR)
(72) Inventor: LEE, Kang Gu, 34124 Daejeon (KR); JEON, Hae Ryong, 34124 Daejeon (KR); JUNG, Jun Hee, 34124 Daejeon (KR)
(74) Representative: Prüfer & Partner mbB Patentanwälte · Rechtsanwälte

(57) **Abstract**

A battery module having a cell stack in which a plurality of battery cells are stacked; a housing having an accommodation space in which the cell stack is accommodated, wherein the accommodation space comprises an open end; a flow path forming compartment covering the open end and comprising an inlet, an outlet, and a flow path forming member ; and a flame blocking member installed in the flow path forming compartment, wherein a first area of a first side opposite to the cell stack among sides of the flow path forming compartment has a value greater than a second area second side opposite to the cell stack among sides of each of the sidewalls.

## Description

### TECHNICAL FIELD

The present disclosure relates to a battery module including a plurality of battery cells including secondary batteries, and a battery pack including the same.

### BACKGROUND

Different from a primary battery, a secondary battery may be charged and discharged, and may be applied to devices within various fields such as digital cameras, mobile phones, notebook computers, hybrid vehicles, and electric vehicles. Examples of a secondary battery include a nickel-cadmium battery, a nickel-metal hydride battery, a nickel-hydrogen battery, and a lithium secondary battery.

Such a secondary battery may be manufactured as a pouch-type battery cell having flexibility or a prismatic or cylindrical can-type battery cell having rigidity, and a plurality of battery cells may be electrically connected to each other. In this case, the plurality of battery cells may form a cell stack having a cell-stacked from, may be disposed in a housing (case) and may form a battery module. Also, the plurality of battery modules may be electrically connected and may form a battery pack.

In the case in which various events occur, such as, when the lifespan of a battery cell approaches an end point, when swelling occurs in the battery cell, when overcharging occurs in the battery cell, when a battery cell is exposed to heat, when sharp objects such as nails penetrates through an exterior material of a battery cell, and/or when an external shock is applied to a battery cell, the battery cell may be ignited. When a flame or high-temperature gas is ejected from a battery cell, a chain ignition of other neighboring battery cells accommodated in the battery module can occur.

When the flames generated from the battery module are exposed to the outside, other components (including other battery modules) around the battery module may be damaged, and possibly leading to the secondary ignition of other components.

Korean Laid-Open Publication No. 2017-0044473 suggests a technique of forming a flow path space connected to an inlet and an outlet on the sidewall of a housing included in an exterior of a battery module to reduce exposure of flames generated in the battery module to the outside.

However, the battery module described above may present concerns in that, since a flow path space is formed in the sidewall portion, a length of a flow path may not have a sufficient length. Accordingly, flames may be exposed to the outside and may lead to secondary ignition, which may be problematic. Also, the battery module described above may present concerns in that, since a duct structure having a flow path is formed on the sidewall, the volume of the battery module may increase due to the duct structure.

### SUMMARY

One aspect of the present disclosure is to provide a battery module which may prevent or reduce external exposure of flames to the outside, and a battery pack including the same.

Another aspect of the present disclosure is to provide a battery module in which an overall volume of the battery module may be reduced when a flame exposure prevention structure is provided to the battery module, and a battery pack including the same.

Still another aspect of the present disclosure is to provide a battery module which may improve structural rigidity, and a battery pack including the same.

According to one aspect of the present disclosure, a battery module comprises a cell stack in which a plurality of battery cells are stacked, and having a bottom side, a top side, and lateral sides connecting the bottom side to the top side; a housing comprising an accommodation space in which the cell stack is accommodated, a plurality of side walls covering the lateral sides, respectively, and a main plate covering one of the top side and the bottom side, wherein the accommodation space comprises an open end formed in a portion opposite to the main plate; a flow path forming compartment covering the open end of the accommodation space and comprising an inlet, an outlet, and a flow path forming member forming a flow path between the inlet and the outlet such that at least one of a gas and flames generated in the accommodating space flows; and a flame blocking member installed in the flow path forming compartment and inhibiting the gas or flames generated in the accommodation space from being exposed to the outside through the outlet, wherein a first area of a first side opposite to the cell stack among sides of the flow path forming compartment has a value greater than a second area of a second side opposite to the cell stack among sides of each of the sidewalls, and wherein the flow path forming member has a flow path length between the inlet and the outlet which extends longer than a linear distance between the inlet and the outlet.

In the battery cell, an electrode terminal may be oriented to the sidewall of the housing. The inlet is disposed adjacent to an edge of the flow path forming compartment. Alternatively, the inlet may be spaced apart from an edge of the flow path forming compartment. In this case, the inlet may be formed in a central region of the flow path forming compartment.

The outlet of the flow path forming compartment may be installed in a position spaced apart from the inlet by a distance of 200 mm to 2000 mm with respect to the flow path from the inlet to the outlet.

The main plate of the housing may support the bottom side of the cell stack, and wherein the flow path forming compartment covers the top side of the cell stack. Alternatively, the flow path forming compartment may support the bottom side of the cell stack, and the main plate of the housing may cover the top side of the cell stack.

The flame blocking member may comprise at least one of a porous metal foam and a metal mesh. The porous metal foam or the metal mesh may comprise a metal material having a melting point of 1000°C to 2000°C. Pores of the porous metal foam or the metal mesh have an average size of 400 to 800 um. The flame blocking member may further comprise at least one of a fire extinguishing material and a phase change material.

The flame blocking member may be installed at the outlet. The flame blocking member may be installed in a position spaced apart from the inlet of the flow path forming compartment by a distance of 200 mm to 2000 mm with respect to the flow path from the inlet to the outlet of the flow path forming compartment.

The flow path forming compartment further may comprise a base member having a flow path space for accommodating the flow path forming member, and a cover member coupled to the base member to cover the flow path space. The inlet may be formed in one of the base member and the cover member to oppose the accommodation space, and the outlet may be formed in the other of the base member and the cover member.

The flow path space may occupy 70% or more of a total volume of the flow path forming compartment.

The flow path forming member forms a flow path having a cross-section having a zigzag shape or a cross-section having a spiral shape.

The flow path forming member may comprise a flow path resistance reducing portion having a curved side or an inclined side in a portion in which a direction of flow changes.

The flow path forming member may comprise a first flow path portion having a first flow path, and a second flow path portion having a second flow path partitioned from the first flow path, and the first flow path portion and the second flow path portion may communicate with at least one inlet and at least one outlet, respectively.

The first flow path and the second flow path may be partitioned from each other by a blocking wall crossing between the first flow path and the second flow path, or by a guide wall forming the first flow path and the second flow path.

According to another aspect of the present disclosure, a battery pack comprises a battery module; and a pack housing accommodating at least one battery module.

According to still another aspect of the present disclosure, a flame exposure prevention structure for a battery module having a housing comprising an accommodation space in which a battery cell stack is accommodated, the flame exposure prevention structure comprising: a flow path forming compartment comprising an inlet, an outlet, and a flow path forming member forming a flow path between the inlet and the outlet such that at least one of a gas and flames generated in the accommodating space flow through the flow path forming compartment; and a flame blocking member installed in the flow path of the flow path forming compartment and configured to inhibit the gas or flames generated in the accommodation space from exiting the flow path forming compartment, wherein the flow path forming compartment is disposed against a side of the battery cell stack having an area larger than other sides of the battery cell stack, and the flow path inside the flow path forming compartment meanders from the inlet to the outlet.

According to still another aspect of the present disclosure, a battery module, comprising: a cell stack in which a plurality of battery cells are stacked, and having a bottom side, a top side, and lateral sides connecting the bottom side to the top side; a housing comprising an accommodation space in which the cell stack is accommodated, a plurality of side walls covering the lateral sides, respectively, and a main plate covering one of the top side and the bottom side of the cell stack; means for confining at least one of a gas and flames generated in the accommodating space into a meandering flow path; and means for blocking the gas and flames generated in the accommodating space from exiting the means for confining.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating a battery module according to one example embodiment of the present disclosure;
FIG. 2 is an exploded perspective diagram illustrating a battery module of FIG, 1 according to this example embodiment of the present disclosure;
FIG. 3 is a cross-sectional diagram taken along line I-I' in FIG. 1;
FIG. 4 is a cross-sectional diagram taken along line II-II' in FIG. 3;
FIG. 5 is a cross-sectional diagram illustrating a modified example of the battery module illustrated in FIG. 3, according to another example embodiment of the present disclosure;
FIGS. 6A to 12B are cross-sectional diagrams illustrating various modified examples of a flow path forming member illustrated in FIG. 4, according to various example embodiments of the present disclosure;
FIG. 13 is an exploded perspective diagram illustrating a battery module according to another example embodiment of the present disclosure; and
FIG. 14 is a cross-sectional diagram taken along line III-III' in FIG. 13.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Shapes and sizes of the elements in the drawings may be exaggerated for clarity of description. Also, elements including the same function represented in the drawing of each example embodiment will be described using the same reference numeral.

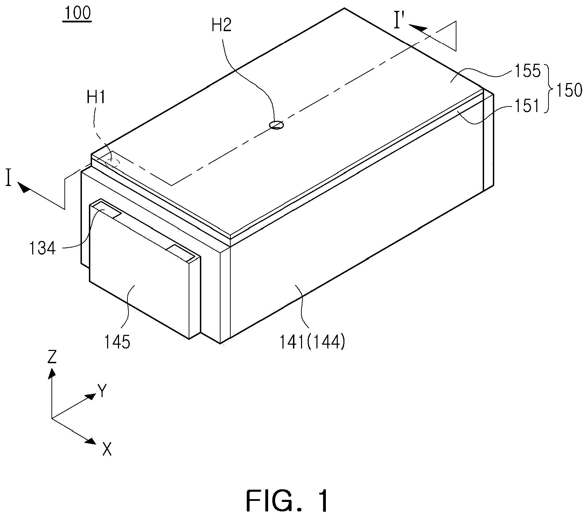

First, a battery module 100 according to an example embodiment will be described with reference to FIGS. 1 to 4.

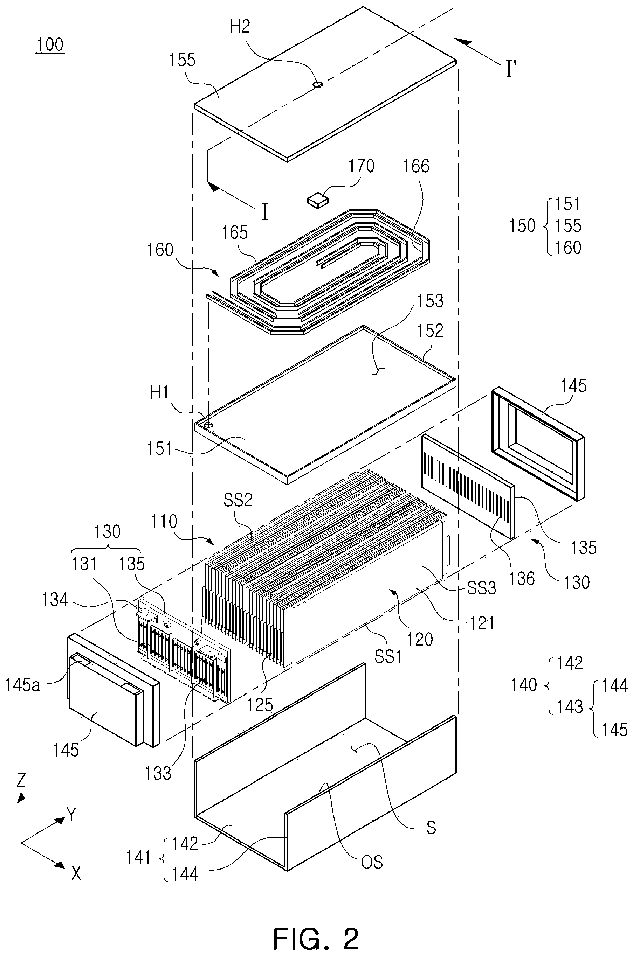

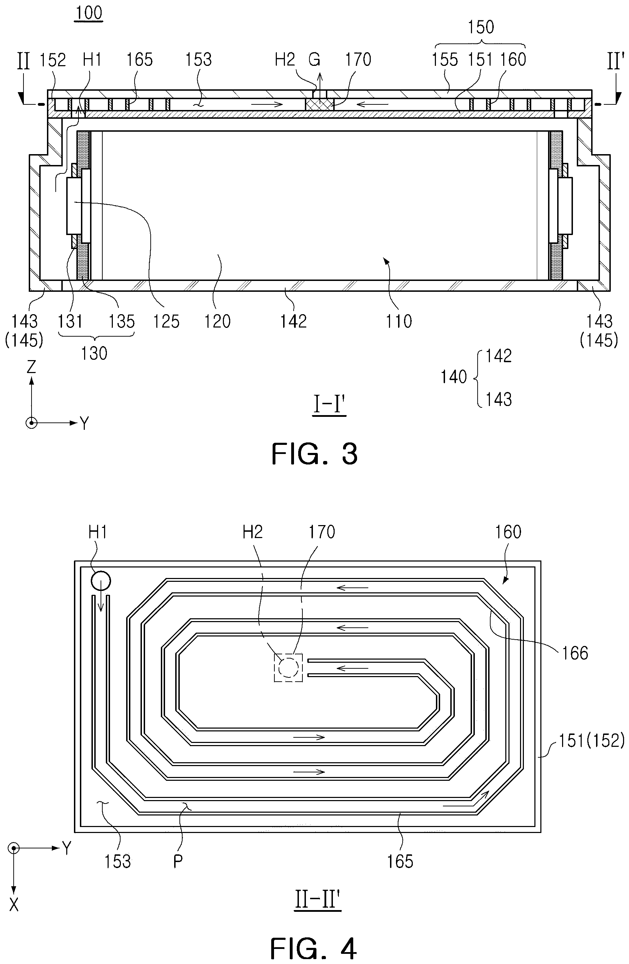

FIG. 1 is a perspective diagram illustrating a battery module 100 according to one example embodiment. FIG. 2 is an exploded perspective diagram illustrating a battery module 100 according to this example embodiment. FIG. 3 is a cross-sectional diagram taken along line I-I' in FIG. 1. FIG. 4 is a cross-sectional diagram taken along line II-II' in FIG. 3.

Referring to FIGS. 1 and 2, the battery module 100 in this example embodiment may include a cell stack 110, a housing 140, a flow path forming unit (or compartment) 150 and a flame blocking member 170.

The cell stack 110 may form a state in which a plurality of battery cells 120 are stacked. In the example embodiment, the battery cells 120 may be stacked in a first direction (left and right or horizontal direction) X in an upright state. However, the plurality of battery cells 120 may be stacked in the third direction (up and down direction) Z in a laid down state, if desired.

The cell stack 110 may have a substantially hexahedral shape in a state in which the battery cells 120 are stacked. That is, the cell stack 110 may have a hexahedral shape having a bottom side SS1, a top side SS2, and four lateral sides SS3 connecting the bottom side SS1 to the top side SS2.

The battery cell 120 may be configured as a secondary battery. As an example, the battery cell 120 may include lithium secondary batteries, but the present disclosure is not limited to this example embodiment. For example, a nickel-cadmium battery, a nickel-metal hydride battery, or a nickel-hydrogen battery may be used as the battery cell 120.

Each battery cell 120 may be configured as a pouch-type secondary battery in which an electrode assembly is accommodated in a pouch (exterior material) 121. However, in this example embodiment, the battery cell 120 is not limited to a pouch-type secondary battery. For example, the battery cell 120 may be configured as a prismatic can-type secondary battery, or may have a configuration in which a plurality of pouch-type secondary batteries are grouped into a bundle. For ease of description, a pouch-type secondary battery will be described hereinafter as an example of the battery cell 120 .

The battery cell 120 may include an electrode assembly, a pouch 121 in which an electrolyte is accommodated, and electrode terminals (electrode leads) 125 exposed to the outside of the pouch 121.

The electrode assembly may include a plurality of electrode plates and electrode tabs and may be accommodated in the pouch 121. Here, the electrode plate may include a positive electrode plate and a negative electrode plate. The electrode assembly may be stacked in a state in which wide sides of the positive and negative plates oppose each other. The positive and negative plates may be stacked with a separator interposed therebetween.

Each of the plurality of positive electrode plates and the plurality of negative electrode plates may include electrode tabs, and each electrode tab may be connected to an electrode terminal (electrode lead) 125 such that the same polarities may be in contact with each other. In the battery cell 120 illustrated in FIGS. 2 and 3, the two electrode terminals 125 may oppose in opposite directions. However, the electrode terminals 125 may be oriented in the same direction and may have different heights.

The housing 140 may form an accommodation space S for accommodating the cell stack 110. The housing 140 may include a plurality of sidewalls 143 covering lateral sides SS3 of the cell stack 110 and a main plate 142 covering one of the bottom side SS1 and a top side SS2 of the cell stack 110.

In the example embodiment in FIGS. 1 to 3, the main plate 142 may be configured as a lower plate supporting the bottom side SS1 of the cell stack 110.

The sidewall 143 may include a plurality of plates covering the lateral side SS3 of the cell stack 110. When the cell stack 110 has a hexahedral shape, the sidewall 143 may include four members.

Two of the four sidewalls 143 may correspond to the lateral side plate 144, and the other two sidewalls 143 may form the end plate 145. The two lateral side plates 144 may be combined with the main plate 142 and may form the housing body 141. The housing body 141 may be manufactured integrally, or the main plate 142 and the two lateral side plates 144 may be separately manufactured and combined. The housing body 141 may have a U-shaped cross-section in which a portion opposing the main plate 142 is open. That is, the housing body 141 may have an open end OS formed in a portion opposite to the main plate 142.

The end plate 145 may have a shape covering both ends of the housing body 141 in the second direction (length direction) Y.

The housing body 141 may be formed of a material having a high thermal conductivity, such as for example a metal. For example, the housing body 141 may be formed of an aluminum material or an aluminum alloy. Similar to the housing body 141, the end plate 145 may be formed of a material having a high thermal conductivity, such as for example aluminum or am aluminum alloy.

However, the material of the housing body 141 and the end plate 145 is not limited thereto, and a variety of materials may be used as long as the material has strength and thermal conductivity similar to that of metal.

Referring to FIGS.2 and 3, the bus bar assembly 130 may be interposed between the end plate 145 and the cell stack 110. The bus bar assembly 130 may include a bus bar 131 which is electrically conductive and electrically connected to the electrode terminal 125 of the battery cell 120 and a support plate 135 which is electrically insulating.

The bus bar assembly 130 may be coupled to one side or both sides on which the electrode terminal 125 of the battery cell 120 is disposed. The electrode terminal 125 may penetrate through the body of the bus bar assembly 130, and the electrode terminals of the same polarities may be connected to each other by the bus bar 131 on the external side of the bus bar assembly 130. To this end, a coupling hole 133 through which the electrode terminal 125 penetrates may be formed in the bus bar assembly 130. The coupling between the electrode terminal 125 and the bus bar 131 may be performed by welding in a state in which the electrode terminal 125 penetrates the coupling hole 133, that is, a state in which the electrode terminal 125 protrudes to the outside of the bus bar 131.

Also, the bus bar assembly 130 may include a plurality of connection terminals 134 for electrical connection to an external entity. Accordingly, the plurality of battery cells 120 may be electrically connected to an external entity through the plurality of connection terminals 134. To this end, the electrode terminal 125 may be electrically connected to the connection terminal 134 through a circuit wiring provided in the bus bar assembly 130. Such circuit wiring may be implemented through at least one bus bar 131 formed of a material such as copper. That is, at least one bus bar 131 may perform electrical connection according to series/parallel connection between the plurality of battery cells 120. The connection terminal 134 may be exposed to the outside through the through hole 145a formed in the end plate 145 as illustrated in FIG. 2. Accordingly, the through hole 145a of the end plate 145 may be formed to have a size corresponding to the size and shape of the connection terminal 134.

The support plate 135 may be disposed between the cell stack 110 and the bus bar 131 which is electrically conductive and may support the bus bar 131, and the electrode terminal 125 may penetrate therethrough. That is, the electrode terminal 125 may penetrate through the support plate 135 and may be connected to the coupling hole 133 formed in the bus bar 131.

The flow path forming unit 150 may form the exterior of the battery module 100 together with the housing 140. The flow path forming unit 150 may oppose the main plate 142 and may have a shape covering the open end OS of the housing body 141. That is, the flow path forming unit 150 may cover the open end OS in a state in which the housing body 141 and the end plate 145 are coupled to each other.

The flow path forming unit 150 may be coupled to and integrated with the housing body 141 and/or the end plate 145 by welding. Since the flow path forming unit 150 is coupled to the housing 140 while completely covering the open end OS of the housing 140, structural rigidity of the battery module 100 may improve.

The flow path forming unit 150 may have a flow path space 153 through which at least one of gas and flames G generated in the accommodation space S of the housing 140 flows. The flow path forming unit 150 may include an inlet H1, an outlet H2, and a flow path forming member 160 forming a flow path P (in FIG. 4) between the inlet H1 and the outlet H2.

The inlet H1 may be provided in a position opposite to the accommodation space S of the housing 140, and the outlet H2 may be oriented to the outside of the battery module 100.

The flow path forming unit 150 may include a base member 151 and a cover member 155 to form a flow path space 153 in which the flow path forming member 160 is disposed. The base member 151 may include a flow path space 153 accommodating the flow path forming member 160, and may have a step 152 to form the flow path space 153. The cover member 155 may be coupled to the base member 151 to cover the flow path space 153. In FIGS. 2 to 4, the base member 151 may be disposed on the lower side and the cover member 155 may be disposed on the upper side with respect to the third direction Z, but the positions of both may be switched. That is, the base member 151 may be defined as a portion of the flow path forming unit 150 in which the step 152 for forming the flow path space 153 extends regardless of the relative position with the cover member 155.

The inlet H1 may be formed in one of the base member 151 and the cover member 155 to oppose the accommodation space S of the housing 140, and the outlet H2 may be formed in the other of the base member 151 and the cover member 155 in which the inlet H1 is not formed.

In one example embodiment, in the battery cell 120, electrode terminal 125 may be oriented to the sidewall 143. When the battery cell 120 is configured as a pouch-type secondary battery in which the electrode terminal 125 is disposed in the length direction Y of the battery cell 120, flames generated in the battery cell 120 and the high-temperature gas may be discharged to the outside of the battery cell 120 through the portion having a relatively weak sealing force in which the electrode terminal (electrode lead) 125 is disposed. Flames and high-temperature gas may be discharged through the portion in which the electrode terminal is formed even in a prismatic can-type secondary battery in which an electrode terminal and a venting portion (or explosion-proof valve) are formed on the side of the battery cell 120 taken in the length direction (Y).

In the case in which the inlet H1 is formed in the sidewall 143, there is a problem in that the high-pressure flames or gas ejected from the battery cell 120 may enter the inlet H1 opposite to the ejection direction. When the ejection pressure of flames entering the flow path space 153 through the inlet H1 is large, the flames may flow through the flow path space 153. Accordingly, a flame blocking member 170 may not function sufficiently, and flames may be discharged to the outside through the outlet H2.

In this example embodiment, since the electrode terminal of the battery cell 120 may be oriented to the sidewall 143, and the inlet H1 is disposed in a position opposite to the top side SS2 of the cell stack 110 rather than the sidewall 143, the pressure of flames or gas may enter the flow path space 153 through the inlet H1 in a state in which the pressure of flames or gas is lowered to some extent in the accommodation space S of the housing 140. Accordingly, in this example embodiment, by changing the position of the inlet H1 away from the direction in which the electrode terminal of the battery cell 120 opposes, the external exposure of flames may be reduced.

As seen in FIG, 4, the flow path forming member 160 may extend the length of the flow path P between the inlet H1 and the outlet H2 to be longer than the linear distance between the inlet H1 and the outlet H2. The flow path forming member 160 may connect the inlet H1 to the outlet H2 to extend the flow path P between the inlet H1 and the outlet H2. The flow path forming member 160 may include a guide wall 165 connecting the inlet H1 to the outlet H2. The flow path forming member 160 may have a height corresponding to the height of the flow path space 153. Since the flow path forming member 160 is installed in the flow path space 153 and functions as a partition wall, the flow path forming member 160 may also perform a function for securing rigidity of the flow path forming unit 150.

Referring to FIGS. 2 to 4, the flow path forming member 160 may have a cross-section having a spiral shape to extend the length of the flow path P. Accordingly, the gas and flame generated in the accommodation space S of the housing 140 may flow in through the inlet H1, may flow along the flow path P formed by the guide wall 165 and may flow toward the outlet H2.

In another example embodiment, the inlet H1 may be disposed adjacent to the edge of the flow path forming unit 150 than the outlet H2. In this case, the outlet H2 may be disposed in a position spaced apart from the edge of the flow path forming unit 150. Accordingly, flames or gas entering the flow path space 153 through the inlet H1 may flow along the flow path P formed by the flow path forming member 160 and may flow toward the outlet H2 on the central side of the flow path forming unit 150.

In this case, the outlet H2 may have a sufficient distance from the ignition source such that flames may not be exposed to the outside through the outlet H2. To this end, the outlet H2 may be installed in a position spaced apart from the inlet H1 by a distance more than or equal to 200 mm and less than or equal to 2000 mm with respect to the flow path P (or the length of the flow path P) from the inlet H1 to the outlet H2.

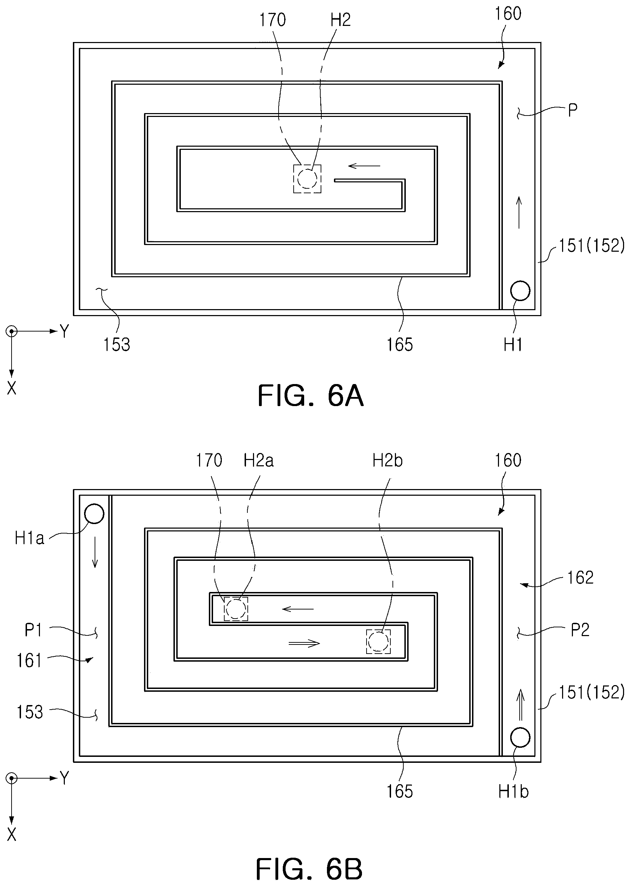

There may be a region in which gas or flame does not flow in the flow path space 153 in FIG. 4, but the flow path P formed by the flow path forming member 160 may be varied as illustrated in FIGS. 6A to 12B. Modified examples to the shape of the flow path forming member 160 and the flow path P formed by the flow path forming member 160 will be described later.

The flow path forming member 160 may include a flow path resistance reducing portion 166 so as to reduce the flow path resistance while flames or a high-temperature gas flows. The flow path resistance reducing portion 166 may be formed in the form of a curved side or an inclined side in a portion of the flow path P in which the direction of flow changes.

The flow path forming unit 150 may be disposed to oppose the top side SS2 of the cell stack 110. Generally, since the cell stack 110 has a wider top side SS2 and a wider bottom side SS1 than the lateral side SS3, the flow path forming unit 150 may have a wider face than that of each sidewall 143. That is, the area of the side opposite to the top side SS2 of the cell stack 110 among the sides of the flow path forming unit 150 may have a value greater than that of the area of the side opposite to the lateral side SS3 of the cell stack 110 among the sides of each sidewall 143. Also, with respect to the exterior of the battery module 100, the area of the side exposed to the outside of the battery module 100 may have a value larger than that of each sidewall 143 of the flow path forming unit 150.

Accordingly, in this example embodiment, when the volume of the flow path space 153 is the same, the thickness (height) of the flow path forming unit for forming the flow path space may be smaller than in a general battery module in which the flow path space is formed in the sidewall 143. Accordingly, in this example embodiment, the volume of the flow path space 153 may be increased without significantly increasing the overall volume of the battery module 100 to form the flow path space 153.

In various example embodiments, to secure the flow path space 153 sufficiently, the flow path space 153 may occupy a space of 70% or more and 100% or less with respect to the total volume of the flow path forming unit 150. For example, when the total volume of the flow path forming unit 150 is 1 liter, the volume of the flow path space 153 may be formed as a space having a size of 0.7 liters or more. Here, the volume of the flow path space 153 may include the volume of the flow path forming member 160.

Also, the ratio between the width in the length direction (X or Y) of the flow path P and the height in the third direction Z perpendicular to the flow path P may have a value of about 2 to 4:1. As an example, the ratio between the width and the height of the flow path P may have a value of 3:1. Also, when the cross-sectional area of the flow path P is too small, the flow rate of flames or high-temperature gas may be increased, and accordingly, flames may be discharged through the outlet H2. In consideration of this, the width and height of the flow path P may have a value of 3 mm or more. As an example, when the ratio of the width to the height of the flow path P has a value of 3:1, the width of the flow path P may have a value of 9 mm and the height of the flow path P may have a value of 3 mm.

The flame blocking member 170 may be installed in the flow path forming unit 150 and may prevent or reduce (or otherwise inhibit) exposure of flames generated in the accommodation space S to the outside through the outlet H2.

The flame blocking member 170 may be installed adjacent to the outlet H2 or outlet H2 to block flames from being exposed to the outside through the outlet H2.

The flame blocking member 170 may include at least one of a porous metal foam and a metal mesh. The flame blocking member 170 may be formed of a flame retardant and heat resistant material. For example, the porous metal foam or the metal mesh may include a metal material having a melting point of 1000°C or higher and 2000°C or lower. For example, the porous metal foam or metal mesh may include a Ni material having a melting point of 1400°C or higher.

The porous metal foam may be formed by foaming a metal material such as Ni. Also, the flame blocking member 170 may include a single metal mesh or may have a structure in which two or more metal meshes are stacked.

Pores of the porous metal foam or the metal mesh may have an average size of 400 to 800 um in the radial direction. When the average size of the pores is less than 400 µm, the gas may not be smoothly discharged due to a large resistance when the gas is discharged. In this case, the electrolyte gas or combustion material generated in the battery module 100 may not be discharged to the outside such that secondary ignition such as thermal runaway may be accelerated. Conversely, when the average size of the pores exceeds 800 µm, flames may penetrate the pores and may be exposed to the outside. In this case, the effect of blocking flames may be reduced, and flames may be exposed to the outside of the battery module, such that other components (including the battery module) adjacent to the battery module may be ignited consecutively.

When the flame blocking member 170 is neighboring to the ignition source, flames may be exposed to the outside through the outlet H2 through the porous metal foam and the metal mesh. That is, when the distance between the ignition source and the flame blocking member 170 is small, ejection pressure of flames may be large, such that the flame blocking member 170 may not sufficiently perform the function of blocking the flame. When the battery cell 120 includes a pouch-type secondary battery or a prismatic can-type secondary battery, flames and high-temperature gas generated in the battery cell 120 may be discharged to the outside of the battery cell 120through the portion in which the electrode terminal (electrode lead) 125 is disposed. That is, in the battery cell 120, the ignition source may correspond to a portion in which the electrode terminal 125 is installed.

In still another example embodiment, the flame blocking member 170 may be disposed at a sufficiently distant distance from the ignition source such that the effect of the ejection pressure of flames on the flame blocking member 170 may be reduced. To this end, the flame blocking member 170 may be installed in a position spaced apart from the inlet H1 side by a predetermined distance. For example, the flame blocking member 170 may be installed in a position spaced apart from the inlet H1 by a distance more than or equal to 200 mm and less than or equal to 2000 mm with respect to the flow path P (or the length of the flow path P) from the inlet H1 to the outlet H2.

Also, the flame blocking member 170 may further include at least one of a fire extinguishing material and a phase change material (PCM) for example made of a material capable of an endothermic reaction.

The fire extinguishing material may perform a function of extinguishing flames flowing through the flow path P. The fire extinguishing material may include a fire extinguishing capsule formed by manufacturing a material having a fire extinguishing function in the form of a capsule, but an example embodiment thereof is not limited thereto. Since various materials are used as the fire extinguishing material, a detailed description thereof will not be provided.

Also, the phase change material (PCM) may lower the temperature of flames or gas by absorbing heat from flames or high-temperature gas flowing through the flow path P. The phase change material may include a phase change capsule prepared in the form of a capsule of an organic type, an inorganic type, or a mixture thereof having phase change properties by an endothermic reaction, but an example embodiment thereof is not limited thereto. Since various materials are used for the phase change material, a detailed description thereof will not be provided.

Only one flame blocking member 170 is shown in FIGS. 2 to 4, but a plurality of the flame blocking member 170 may be provided in the flow path space 153. To this end, the fire extinguishing material or the phase change material may be disposed separately from the porous metal foam and/or the metal mesh in the flow path P disposed on the front end of the porous metal foam and/or the metal mesh in the entire flow path P.

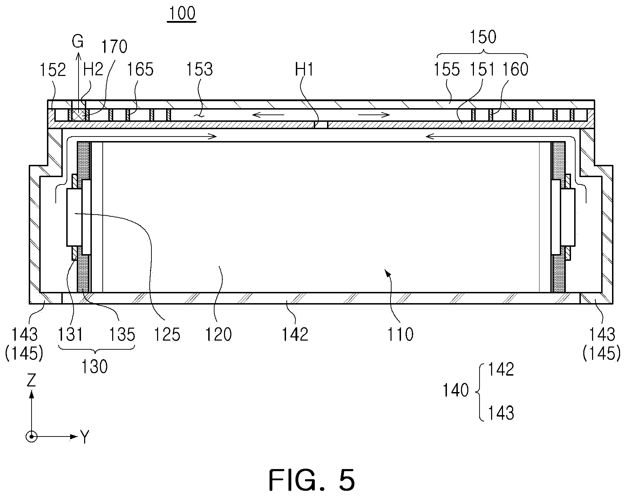

In the description below, a modified example of the battery module 100 will be described with reference to FIG. 5.

FIG. 5 is a cross-sectional diagram illustrating a modified example of the battery module 100 illustrated in FIG. 3.

Similar to the battery module 100 described with reference to FIGS. 1 to 4, the battery module 100 illustrated in FIG. 5 may include the cell stack 110, the housing 140, the flow path forming unit 150, and the flame blocking member 170. However, the battery module 100 illustrated in FIG. 5 is different from the battery module 100 described with reference to FIGS. 1 to 4 in that the positions of the inlet H1 and the outlet H2 are switched with respect to each other. Accordingly, the detailed description of the battery module 100 illustrated in FIG. 5 is similar to the above description of FIGS. 1 to 4 but with the different components described in detail.

In the example embodiment illustrated in FIG. 5, the inlet H1 may be disposed farther from the edge of the flow path forming unit 150 than the outlet H2. For example, the inlet H1 may be formed in the central region of the flow path forming unit 150, the outlet H2 may be formed in a position adjacent to the edge of the flow path forming unit 150.

In this case, flames or gas ejected through the electrode terminal 125 may pass through the lateral side SS3 (in FIG. 2) and the top side SS2 (in FIG. 2) of the cell stack 110 and may flow to the inlet H1. Accordingly, flames or high-temperature gas may flow a sufficient distance before entering the flow path space 153 in the flow path forming unit 150. Accordingly, flames or gas may enter the inlet H1 with a sufficiently reduced injection pressure not to damage components of the flow path forming unit 150. Since the flow path of flames or gas may increase in the example embodiment in FIG. 5 as compared to the example embodiment in FIG. 3, the possibility of external leakage of flames may be further reduced than that of the example embodiment in FIG. 3. Also, since the flame flow distance from the ignition source to the flame blocking member 170 may also be increased in the example embodiment in FIG. 5, the flame blocking effect of the flame blocking member 170 may be increased.

FIGS. 6A to 12B are cross-sectional diagrams illustrating various modified examples of the flow path forming member illustrated in FIG. 4. The example embodiments in FIGS. 6A to 12B may have a configuration similar to that of the example embodiment illustrated in FIG. 4, and accordingly, detailed descriptions of the same or similar components will not be provided but the different components will be described. Also, since the example embodiments illustrated in FIGS. 6A to 12B may have similar components, detailed descriptions of the same or similar configurations will not be provided.

In the example embodiment illustrated in FIG. 6A, the flow path forming member 160 may form a flow path P having a spiral shape by the guide wall 165, and as compared to the flow path forming member 160 illustrated in FIG. 4, the length of the entire flow path P may increase. That is, in the case of the example embodiment in FIG. 6A, the flow path P may be formed in the entire region of the flow path space 153 other than the portion in which the flow path forming member 160 is disposed. As a result, the length of the flow path P may be increased.

In the example embodiment illustrated in FIG. 6B, the flow path forming member 160 may form a plurality of flow paths P1 and P2. That is, the flow path forming member 160 may form a first flow path portion 161 having a first flow path P1, and a second flow path portion 162 having a second flow path P2 partitioned from the first flow path P1. In this case, the first flow path P1 and the second flow path P2 may be partitioned by guide walls 165 forming the first flow path P1 and the second flow path P2. That is, the first flow path P1 may be formed in one space and the second flow path P2 may be formed in the other space based on the guide wall. As a result, a structure for dividing the flow path may be implemented.

The first flow path portion 161 and the second flow path portion 162 may communicate with at least one inlet H1a and H1b and at least one outlet H2a and H2b, respectively. For example, the first flow path portion 161 may communicate with the first inlet H1a and the first outlet H2a, and the second flow path portion 162 may communicate with the second inlet H1b and the second outlet H2b. Also, the flame blocking member 170 may be provided in each of the flow paths P1 and P2 adjacent to the first outlet H2a and the second outlet H2b.

When the plurality of flow paths P1 and P2 are formed through the flow path forming member 160, flames or gas generated in the housing 140 may flow into the plurality of flow paths P1 and P2 through the plurality of inlets H1a and H1b and may be discharged to the outside through respective outlets H2a and H2b. Accordingly, the ejection pressure of flames or gas flowing into the flow paths P1 and P2 may be divided, thereby reducing possibility of external exposure of the flame.

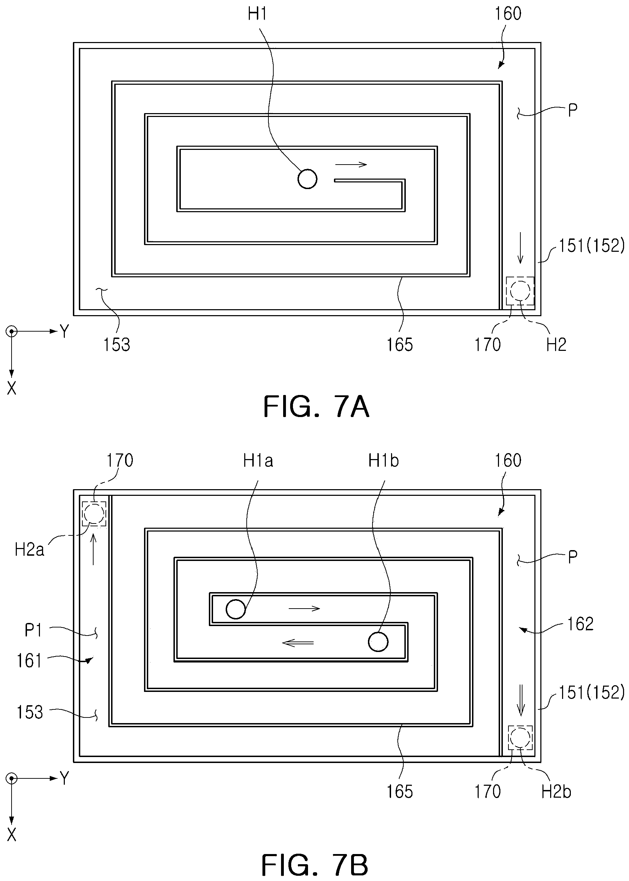

The example embodiment in FIG. 7A is a modified example to that in FIG. 6A, and FIG. 7B is a modified example of FIG. 6B. As compared to the example embodiment in FIGS. 6A and 6B, in the example embodiment in FIGS. 7A and 7B, only the positions of the inlets H1a and H1b and the outlets H2a and H2b may be switched with respect to each other. Accordingly, in the example embodiment in FIGS. 7A and 7B, similar to the example embodiment in FIG. 5, the distance through which flames or gas flows from the ignition source to the inlets H1a and H1b may be increased. Accordingly, the possibility of external leakage of flames may be further reduced than in the example embodiment in FIGS. 6A and 6B.

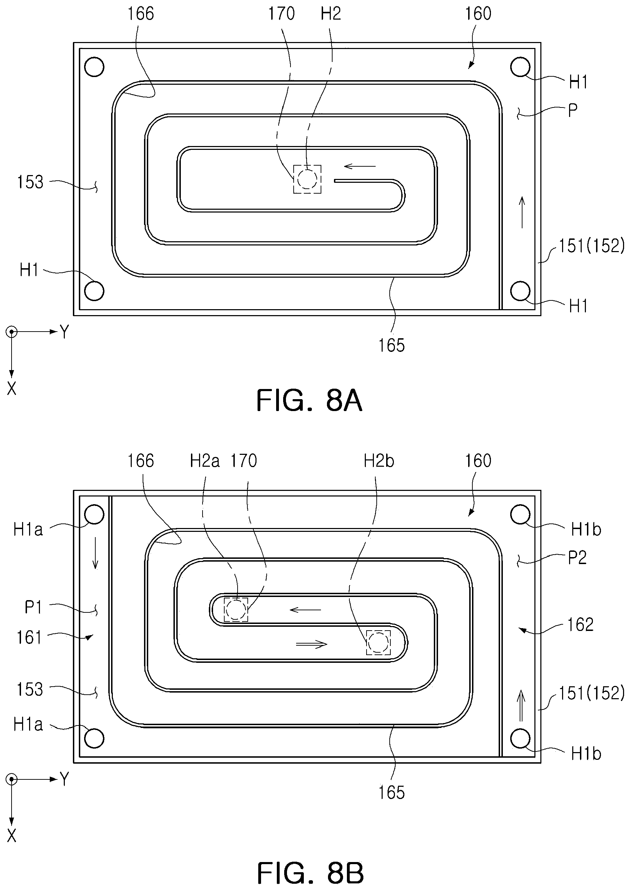

The example embodiment in FIG. 8A is a modified example of the example embodiment in FIG. 6A, and FIG. 8B is a modified example of the example embodiment in FIG. 6B. The example embodiment in FIGS. 8A and 8B may be different from that in FIGS. 6A and 6B in that a flow path resistance reducing portion 166 for reducing flow resistance may be provided in a portion of the guide walls 165 in which the direction of flow is changed. The flow path resistance reducing portion 166 may have a curved side in the portion in which the direction of flow changes, or may have an inclined side.

Also, as illustrated in the example embodiment in FIGS. 8A and 8B, a plurality of inlets H1, H1a, and H1b may be formed in flow path P, P1, and P2.

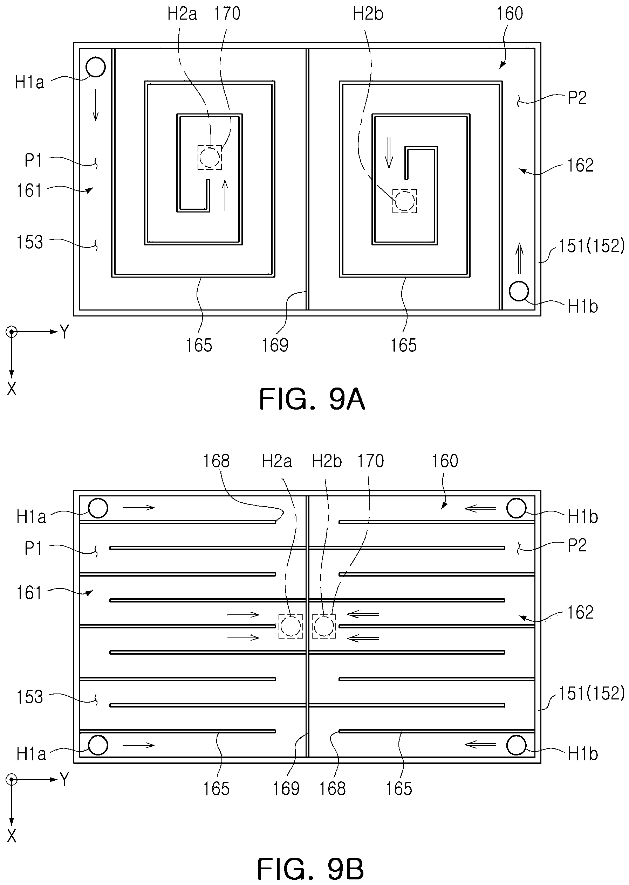

The flow path forming member 160 illustrated in FIGS. 9A and 9B may form a first flow path portion 161 having a first flow path P1 and a second flow path portion 162 having a second flow path P2 partitioned from the first flow path P1. The first flow path portion 161 and the second flow path portion 162 may be formed by the guide wall 165. The first flow path portion 161 and the second flow path portion 162 may communicate with at least one inlet H1a and H1b and at least one outlet H2a and H2b, respectively. For example, the first flow path portion 161 may communicate with the first inlet H1a and the first outlet H2a, and the second flow path portion 162 may communicate with the second inlet H1b and the second outlet H2b.

The first flow path P1 and the second flow path P2 may be partitioned by a blocking wall 169 crossing the first flow path P1 and the second flow path P2. The blocking wall 169 may be disposed for example in the center of the flow path forming unit 150 and may partition the first flow path P1 and the second flow path P2 from each other.

In the example embodiment in FIG. 9A, each of the first flow path portion 161 and the second flow path portion 162 may form a flow path P having a spiral shape. In the example embodiment in FIG. 9B, each of the first flow path portion 161 and the second flow path portion 162 may form a flow path P having a zigzag shape by the guide wall 165.

In the example embodiment in FIG. 9B, the guide wall 165 may include an opening 168 formed in the end and may form a flow path P of a zigzag shape. The opening 168 may have a shape in which an end of the guide wall 165 is cut off.

Also, the first flow path portion 161 may include a plurality of first inlets H1a and a single first outlet H2a, and the second flow path portion 162 may include a plurality of second inlets H1b and a single second outlet H2b. In this case, flames or gas flowing from the plurality of inlets H1 may flow toward one outlet H2, and flames may be blocked from being exposed to the outside by the flame blocking member 170, and only the gas may be discharged through the outlet H2 to the outside.

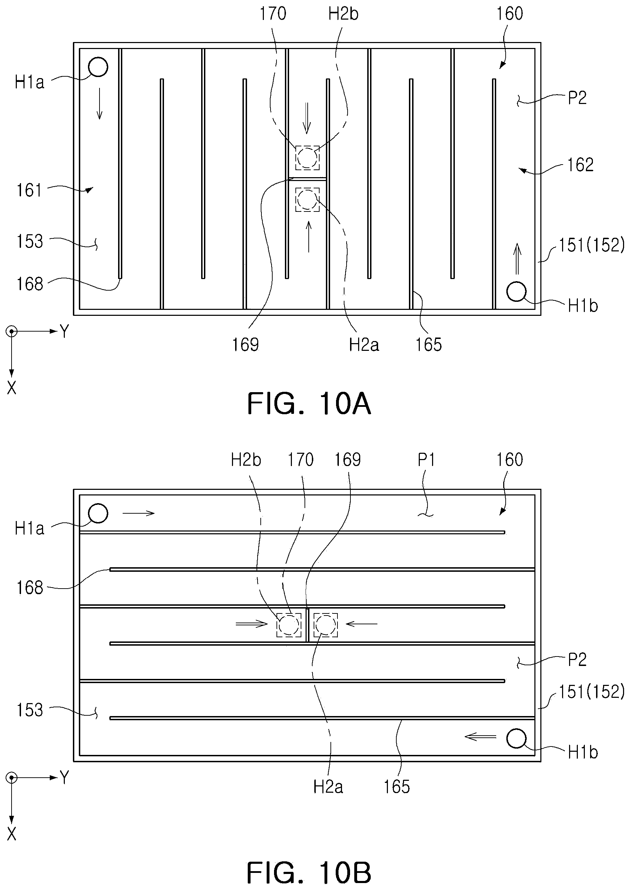

In the example embodiment in FIGS. 10A and 10B, each of the first flow path portion 161 and the second flow path portion 162 may form the flow path P having a zigzag shape by the guide wall 165. The first flow path P1 and the second flow path P2 may be partitioned by a blocking wall 169 crossing the first flow path P1 and the second flow path P2. Also, a single first inlet H1a and a single first outlet H2a may be formed in the first flow path portion 161, and a single second inlet H1b and a single second outlet H2b may be formed in the second flow path portion 162.

An opening 168 may be formed in the end of the guide wall 165 in the example embodiment in FIGS. 10A and 10B, and the opening 168 may have a shape in which the end of the guide wall 165 is cut off.

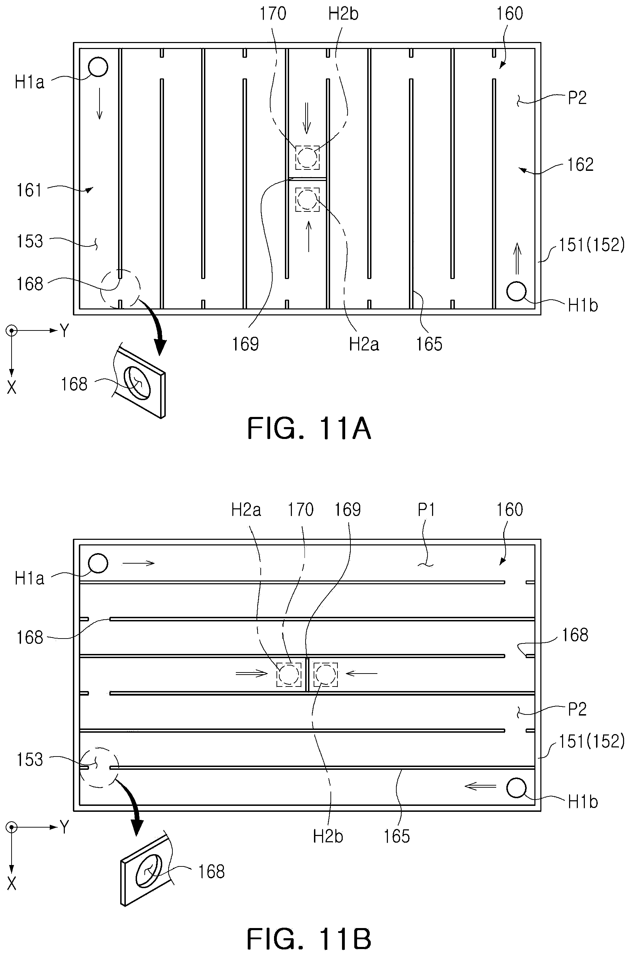

The example embodiment in FIGS. 11A and 11B is a modified example of the example embodiment in FIGS. 10A and 10B, respectively. The example embodiment in FIGS. 11A and 11B is different from the example embodiment in FIGS. 10A and 10B in that the opening 168 is configured as a hole formed in the guide wall 165. Accordingly, detailed descriptions of the example embodiments in FIGS. 11A and 11B will not be provided.

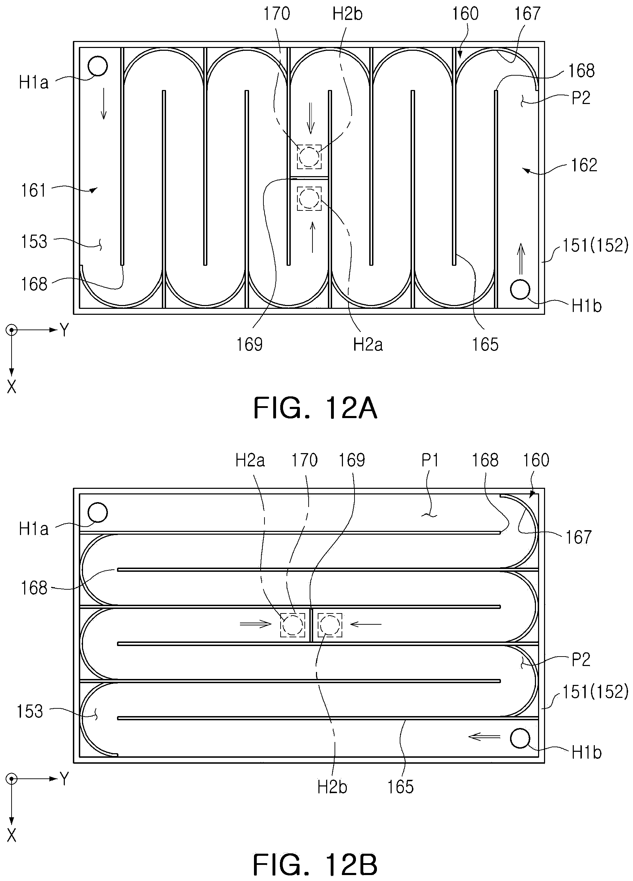

The example embodiment in FIGS. 12A and 12B is a modified example of the example embodiment in FIGS. 10A and 10B, respectively. The example embodiment in FIGS. 12A and 12B is different from the example embodiment in FIGS. 10A and 10B in that the flow path resistance reducing portion 167 having a curved side is provided in a portion in which a direction of flowing changes. The flow path resistance reducing portion 167 may have a shape in which a member having a curved side is attached to a portion adjacently to the opening 168 formed in the guide wall 165. The flow path resistance reducing portion 167 may be manufactured separately from the guide wall 165, or the components may be integrated with each other.

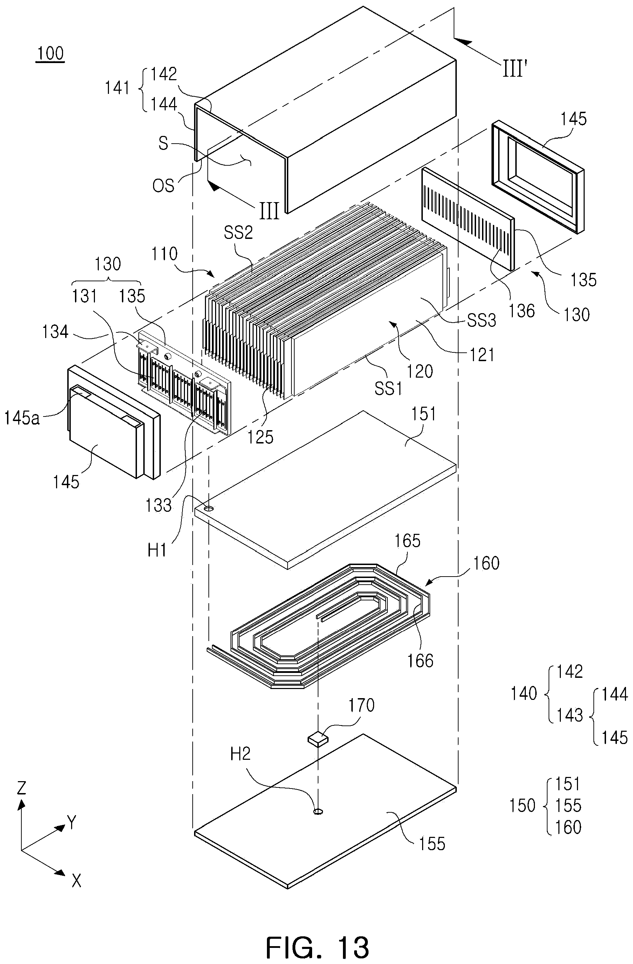

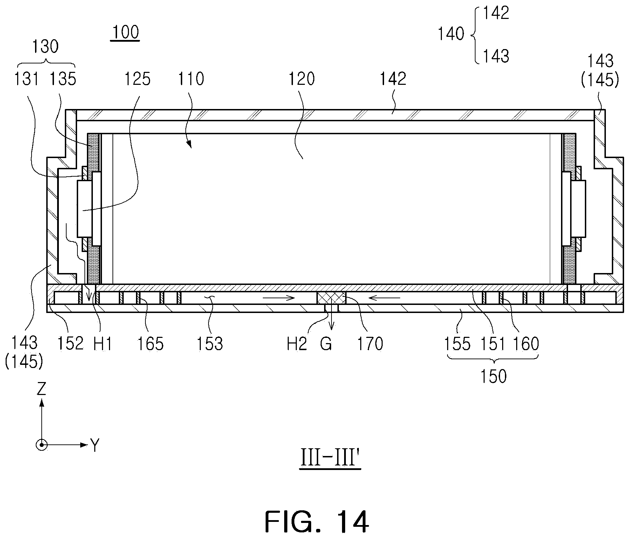

In the description below, a battery module 100 according to another example embodiment will be described with reference to FIGS. 13 and 14.

FIG. 13 is an exploded perspective diagram illustrating a battery module 100 according to another example embodiment. FIG. 14 is a cross-sectional diagram taken along line III-III' in FIG. 13.

The battery module 100 illustrated in FIGS. 13 and 14 may include the cell stack 110, the housing 140, the flow path forming unit 150 and the flame blocking member 170, similar to the battery module 100 described with reference to FIGS. 1 to 4. However, the battery module 100 illustrated in FIGS. 13 and 14 is different from the battery module 100 described with reference to FIGS. 1 to 4 only in terms of the shape of the housing 140 and the arrangement position of the flow path forming unit (or compartment) 150. Accordingly, the detailed description of the battery module 100 illustrated in FIGS. 13 and 14 is similar to the above description of FIGS. 1 to 4 but here with the different components described in detail.

The housing 140 may include a plurality of sidewalls 143 covering the lateral side SS3 of the cell stack 110, and a main plate 142 covering one of the top side SS2 and the bottom side SS1 of the cell stack 110. In the example embodiment in FIGS. 13 and 14, the main plate 142 may be configured as an upper plate covering the top side SS2 of the cell stack 110. Also, the two lateral side plates 144 may be combined with the main plate 142 covering the top side SS2 of the cell stack 110 and may form the housing body 141.

Also, the flow path forming unit 150 may form the exterior of the battery module 100 together with the housing 140, and may be disposed to oppose the bottom side SS1 of the cell stack 110. The flow path forming unit 150 may support the bottom side SS1 of the cell stack 110.

The area of the side opposite to the bottom side SS1 of the cell stack 110 among the sides of the flow path forming unit 150 may have a value greater than a value of the area of the side opposing the lateral side SS3 of the cell stack 110 among the sides of each sidewall 143. Also, with reference to the exterior of the battery module 100, the area of the side exposed to the outside of the battery module 100 may have a value larger than that of each sidewall 143 of the flow path forming unit 150.

The inlet H1 may be formed in one of the base member 151 and the cover member 155 to oppose the accommodation space S of the housing 140, and the outlet H2 may be formed in the other of the base member 151 and the cover member 155 in which the inlet H1 is not formed.

When the flow path forming unit 150 is configured to support the bottom side SS1 of the cell stack 110 as above, flames or gas generated in the housing 140 may be discharged to the outside through the flow path forming unit 150 disposed below the cell stack 110. In this case, the mounting structure (e.g., the housing of the battery pack) on which the battery module 100 is installed may have a shape not closing the outlet H2, and an exhaust passage for discharging the gas discharged through the outlet H2 to the outside of the mounting structure may be formed.

Meanwhile, the battery module 100 in this example embodiment may form a battery pack. The battery pack may include a pack housing forming an internal space of a predetermined size, and at least one battery module 100 accommodated in the pack housing. Since a battery pack accommodating at least one battery module 100 may have various forms as is known in the art, a detailed description thereof will not be provided.

According to at least one of the aforementioned example embodiments, the effect in which exposure of flames generated in the housing to the outside may be prevented or may be reduced may be obtained.

Also, the effect in which a flame exposure prevention structure may be installed and the reduction in the overall volume of the battery module may be reduced may be obtained.

Also, the effect in which structural rigidity of the battery module may improve through the flow path forming unit.

While the example embodiments have been illustrated and described above, it will be apparent to those skilled in the art that modified examples and variations could be made without departing from the scope of the present disclosure.

For example, it may be implemented by deleting some components in the above-described embodiments, and each of the embodiments and modified examples may be implemented in combination with each other.

## Claims

1. A battery module, comprising:
a cell stack in which a plurality of battery cells are stacked, and having a bottom side, a top side, and lateral sides connecting the bottom side to the top side;
a housing comprising an accommodation space in which the cell stack is accommodated, a plurality of side walls covering the lateral sides, respectively, and a main plate covering one of the top side and the bottom side of the cell stack, wherein the accommodation space comprises an open end formed in a portion opposite to the main plate;
a flow path forming compartment covering the open end of the accommodation space and comprising an inlet, an outlet, and a flow path forming member forming a flow path between the inlet and the outlet such that at least one of a gas and flames generated in the accommodating space flows; and
a flame blocking member installed in the flow path forming compartment and inhibiting the gas or flames generated in the accommodation space from being exposed to the outside through the outlet,
wherein a first area of a first side opposite to the cell stack among sides of the flow path forming compartment has a value greater than a second area of a second side opposite to the cell stack among sides of each of the sidewalls, and
wherein the flow path forming member has a flow path length between the inlet and the outlet which extends longer than a linear distance between the inlet and the outlet.

2. The battery module of claim 1, wherein, in the battery cell, an electrode terminal is oriented to the sidewall of the housing.

3. The battery module of claim 1 or 2,
wherein the inlet is disposed adjacent to an edge of the flow path forming compartment,
wherein the inlet is spaced apart from an edge of the flow path forming compartment, or
wherein the inlet is formed in a central region of the flow path forming compartment.

4. The battery module of anyone of claims 1 to 3, wherein the outlet of the flow path forming compartment is installed in a position spaced apart from the inlet by a distance of 200 mm to 2000 mm with respect to the flow path from the inlet to the outlet.

5. The battery module of anyone of the preceding claims,
wherein the main plate of the housing supports the bottom side of the cell stack and the flow path forming compartment covers the top side of the cell stack, or
wherein the flow path forming compartment supports the bottom side of the cell stack and wherein the main plate of the housing covers the top side of the cell stack.

6. The battery module of anyone of the preceding claims, wherein the flame blocking member comprises at least one of a porous metal foam and a metal mesh.

7. The battery module of claim 6,
wherein the porous metal foam or the metal mesh comprises a metal material having a melting point of 1000°C to 2000°C, and/or
wherein pores of the porous metal foam or the metal mesh have an average size of 400 to 800 µm.

8. The battery module of claim 6, wherein the flame blocking member further comprises at least one of a fire extinguishing material and a phase change material.

9. The battery module of anyone of the preceding claims,
wherein the flame blocking member is installed at the outlet of the flow path forming compartment, or
wherein the flame blocking member is installed in a position spaced apart from the inlet of the flow path forming compartment by a distance of 200 mm to 2000 mm with respect to the flow path from the inlet to the outlet.

10. The battery module of anyone of the preceding claims, wherein the flow path forming compartment further comprises a base member having a flow path space for accommodating the flow path forming member, and a cover member coupled to the base member to cover the flow path space,
wherein the inlet is formed in one of the base member and the cover member to oppose the accommodation space, and
wherein the outlet is formed in the other of the base member and the cover member.

11. The battery module of claim 10, wherein the flow path space occupies 70% or more of a total volume of the flow path forming compartment.

12. The battery module of anyone of the preceding claims, wherein the flow path forming member forms a flow path having a cross-section having a zigzag shape or a cross-section having a spiral shape, and
wherein the flow path forming member comprises a flow path resistance reducing portion having a curved side or an inclined side in a portion in which a direction of flow changes.

13. The battery module of anyone of the preceding claims,
wherein the flow path forming member comprises a first flow path portion having a first flow path, and a second flow path portion having a second flow path partitioned from the first flow path,
wherein the first flow path portion and the second flow path portion communicate with at least one inlet and at least one outlet, respectively,
and wherein the first flow path and the second flow path are partitioned from each other by a blocking wall crossing between the first flow path and the second flow path, or by a guide wall forming the first flow path and the second flow path.

14. A battery pack, comprising:
a battery module of any one of claims 1 to 13; and
a pack housing accommodating at least one battery module.

15. A flame exposure prevention structure for a battery module having a housing comprising an accommodation space in which a battery cell stack is accommodated, the flame exposure prevention structure comprising:
a flow path forming compartment comprising an inlet, an outlet, and a flow path forming member forming a flow path between the inlet and the outlet such that at least one of a gas and flames generated in the accommodating space flow through the flow path forming compartment; and
a flame blocking member installed in the flow path of the flow path forming compartment and configured to inhibit the gas or flames generated in the accommodation space from exiting the flow path forming compartment,
wherein
the flow path forming compartment is disposed against a side of the battery cell stack having an area larger than other sides of the battery cell stack, and
the flow path inside the flow path forming compartment meanders from the inlet to the outlet.
